# EUROPÄISCHE PATENTSCHRIFT

(11) **EP 0 752 549 B1**
(45) Veröffentlichungstag und Bekanntmachung des Hinweises auf die Patenterteilung: **12.04.2000**
(21) Anmeldenummer: 96110209.2
(22) Anmeldetag: 25.06.1996
(51) Int. Cl.: F16H 63/20, F16H 63/34

(54) **Schaltvorrichtung für Wechselgetriebe von Kraftfahrzeugen**
Shift mechanism for vehicle transmissions
Dispositif de changement de vitesses pour transmissions véhiculaires

(30) Priorität: 01.07.1995 DE 19524073
(43) Veröffentlichungstag der Anmeldung: 08.01.1997
(73) Patentinhaber: Ford Global Technologies, Inc., Dearborn, Michigan 48126-2490 (US)
(72) Erfinder: Fuchs, Anton, 95447 Bayreuth (DE); Schultheiss, Ralf, 53533 Antweiler (DE)
(74) Vertreter: Messulam, Alec Moses

(56) Entgegenhaltungen:
- DE-A- 3 147 782
- DE-C- 276 790
- FR-A- 643 326

## Beschreibung

Die Erfindung bezieht sich auf eine Schaltvorrichtung für Wechselgetriebe von Kraftfahrzeugen, der im Oberbegriff des Patentanspruches 1 erläuterten Art.

Aus der DE-PS 31 47 782 ist eine Schaltvorrichtung für Wechselgetriebe von Kraftfahrzeugen, der im Oberbegriff des Patentanspruches 1 erläuterten Art bekannt.

Bei dieser bekannten Schaltvorrichtung für Wechselgetriebe von Kraftfahrzeugen ist noch keine innere Schaltkulisse vorgesehen und dementsprechend wird die Genauigkeit der Schaltbewegungen erheblich von den in der Schaltvorrichtung auftretenden Fertigungstoleranzen beeinträchtigt.

Aus der DE-PS 39 13 269 ist eine ähnliche Schaltvorrichtung für Wechselgetriebe von Kraftfahrzeugen bekannt, wobei hier eine innere Schaltkulisse vorgesehen ist, die mit einem an der Schaltwelle befestigten Schaltstift zusammenwirkt, um eine bessere Führung der Schaltbewegungen sicherzustellen. Der bei dieser Schaltvorrichtung erforderliche zusätzliche Schaltstift erhöht den Bauaufwand und bringt weitere Toleranzen mit sich.

Die Aufgabe der Erfindung ist es, eine Schaltvorrichtung für Wechselgetriebe von Kraftfahrzeugen, der im Oberbegriff des Patentanspruches 1 erläuterten Art derart zu verbessern, daß zur Führung der Schaltbewegungen eine Art innere Schaltkulisse zur Verfügung gestellt wird, die jedoch nur ein Minimum an zusätzlichen Bauteilen erfordert.

Gemäß der Erfindung wird diese Aufgabe gelöst, indem eine Schaltvorrichtung für Wechselgetriebe von Kraftfahrzeugen, der im Oberbegriff des Patentanspruches 1 erläuterten Art, die im Kennzeichenteil des Patentanspruches 1 aufgezeigten Merkmale aufweist.

In den weiteren Ansprüchen sind zweckmäßige Ausgestaltungen der Erfindung erläutert.

Dadurch, daß im Gehäuse eine Schaltführung festgelegt ist, die mit keilförmigen Sperrzähnen zwischen einander benachbarten Schaltarmen oder anliegend an einen außenliegenden Schaltarm von mehreren Schaltgabeln unmittelbar benachbart den Auswählnuten an den Schaltarmen der Schaltgabeln einragt und unmittelbar mit dem Schaltfinger an der Schaltwelle zusammenwirkt, wird nur mit einem zusätzlichen Bauteil eine Führung für die Schaltbewegungen zur Verfügung gestellt, die durch ihr unmittelbares Zusammenwirken mit dem Schaltfinger nur von einem Minimum an Toleranzen beeinflußt ist.

Die Erfindung wird anhand eines in den beigefügten Zeichnungen schematisch gezeigten Ausführungsbeispieles näher erläutert. Es zeigt:
- Fig. 1: eine schematische Ansicht in Richtung der Schaltwelle mit der erfindungsgemäßen Schaltführung in ihrer Lage bei einer ausgewählten Schaltgabel, wobei die in der Ebene des Schaltfingers liegenden Teile im Schnitt gezeigt sind;
- Fig. 2: eine ähnliche Ansicht wie Fig. 1 mit der erfindungsgemäßen Schaltführung in einer Übergangsposition und
- Fig. 3: eine Schrägrißansicht der erfindungsgemäßen Schaltführung mit darin durch Schraffuren angedeuteten Übergangsflächen zum Bereitstellen von sogenannten Cross-Shift-Funktionen.

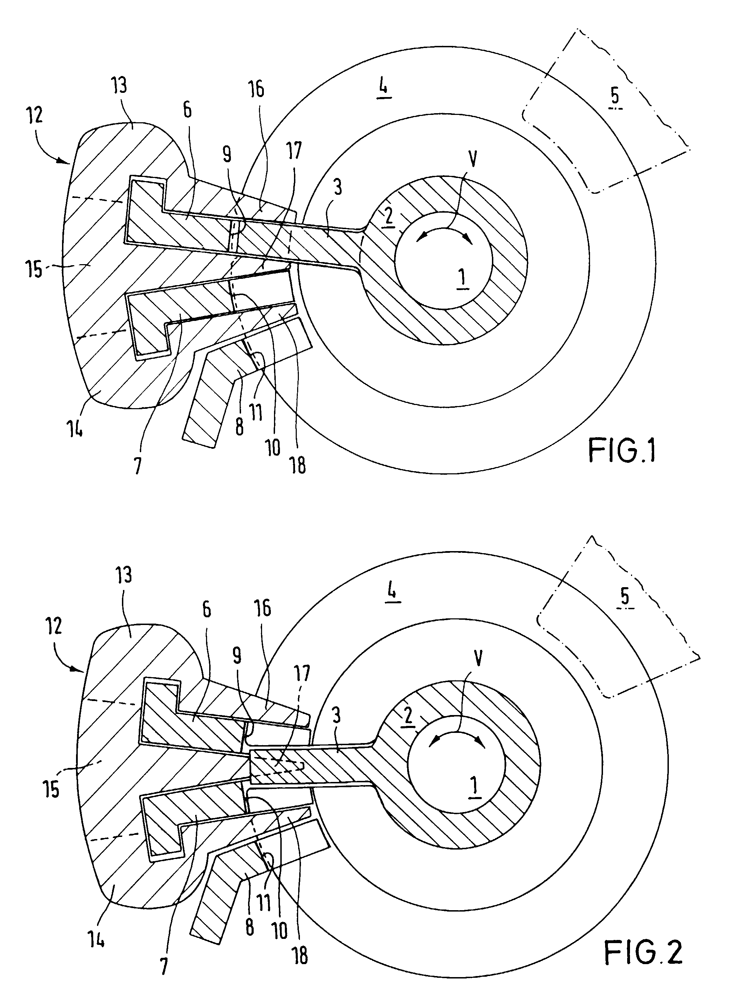

In den Figuren 1 und 2 ist eine Schaltwelle mit 1 bezeichnet. An der Schaltwelle 1 ist über eine Schaltfingernabe 2 ein Schaltfinger 3 verbunden, der in bekannter Weise z.B. eine Drehbewegung durch den Doppelpfeil V angedeutet und eine axiale Einrückbewegung ausführen kann. Während einer Drehbewegung wird der Schaltfinger 3 von einem Sperrsektor 4 einer nur prinzipiell angedeuteten Sperrvorrichtung 5 begleitet, die koaxial zur Schaltwelle 1 angeordnet ist, mit dieser mit drehen kann, aber im Gehäuse gegen eine axiale Verlagerung abgestützt ist.

Im Bereich der Vorwählbewegung des Schaltfingers 3 sind die sogenannten Schaltarme 6, 7 und 8 von entsprechenden Schaltgabeln angeordnet, über die z.B. der 1. und 2. Gang, der 3. und 4. Gang und der 5. Gang und der Rückwärtsgang geschaltet werden können. In den Schaltarmen 6, 7 und 8 sind Wählnuten 9, 10 und 11 angeordnet, in die der Schaltfinger 3 eintreten kann, um die der mit dem jeweiligen Schaltarm verbundene Schaltgabel auszuwählen.

Bei der entsprechenden Auswahl einer Auswahlnut 9 eines Schaltarmes 6 durch den Schaltfinger 3 werden die jeweils anderen Schaltarme 7 und 8 durch den in deren Auswahlnuten 10 und 11 eintretende Sperrsektor 4 der Sperrvorrichtung 5 gegen eine ungewollte axiale Mitverlagerung gesperrt.

Der Ablauf der Schaltbewegung, d.h., der Ablauf der Drehbewegung mit der nachfolgenden axialen Einrückbewegung ist hierbei von einer Vielzahl von Toleranzen mitbestimmt, die sich aus der Fertigung der einzelnen Teile der Schaltvorrichtung, z.B. der Schaltgabeln mit den Schaltarmen und den Auswählnuten darin, ergeben. Dementsprechend hat man versucht, den sauberen Ablauf der Schaltbewegung durch eine zusätzliche Führung zu verbessern, die durch den eingangs erwähnten Schaltstift in Verbindung mit der inneren Schaltkulisse gebildet wurde. Die genaue Lage des zusätzlichen Schaltstiftes und die Anordnung der inneren Schaltkulisse bringen jedoch neue Toleranzen mit sich, die die Schaltbewegung beeinträchtigen.

Gemäß der Erfindung wird daher eine Schaltführung 12 vorgeschlagen, die im Getriebe gegen eine radiale und axiale Bewegung festgelegt ist, wobei jedoch die Festlegung der Schaltführung 12 möglichst unmittelbar an den mit ihr zusammenwirkenden Bauteilen, den Schaltarmen 6, 7 und 8 oder ["ihren Führungswellen"] erfolgt. Die Schalführung 12 weist zwei Führungsleisten 13 und 14 auf, sowie eine Reihe von paarweise angeordneten, keilförmigen Sperrzähnen 16, 17 und 18, die zwischen einander benachbarten Schaltarmen 6 und 7 bzw. anliegend an den äußeren Schaltarm 8 ausgebildet sind. Die jeweils paarweise angeordneten Sperrzähne 16, 17 und 18 ermöglichen den radialen Durchtritt des Schaltfingers 3 und der ihm nachfolgenden Endkanten des Sperrsektors 4 der Sperrvorrichtung 5.

Die erfindungsgemäße Schaltführung 12 mit den entsprechenden Sperrzähnen 16, 17 und 18 stellen eine Art innere Kulisse dar, nur daß diese unmittelbar im Bereich der Schaltarme 6, 7 und 8 angeordnet ist und mit den unmittelbaren Bauteilen wie folgt zusammenwirkt.

Zwei der Schaltarme 6 und 7 liegen zwischen den Zähnen 16 und 17 der Schaltführung 12 und der dritte Schaltarm 8 liegt von außen gegen die Sperrzähne 18. Die Führungsleisten 13 und 14 der Schaltführung 12 nehmen keine direkten Schaltkräfte auf, sie dienen nur der Sicherheit gegen ein mögliches Verkanten und anstelle der Führungsleisten können auch andere Führungsformen realisiert werden.

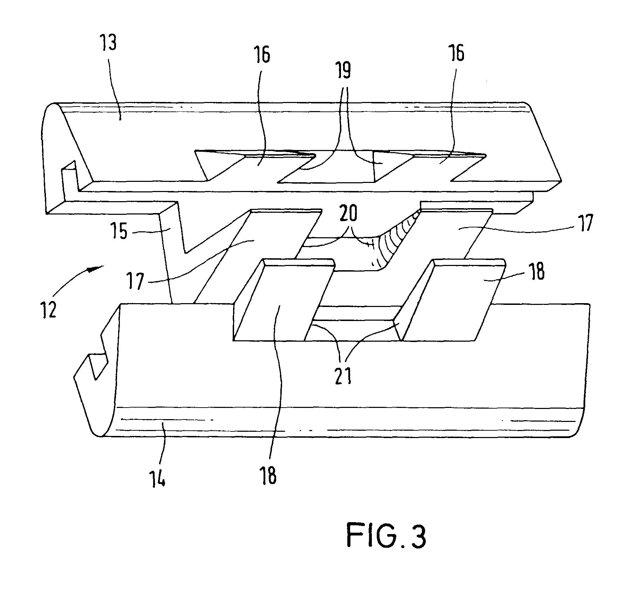

Der Sperrsektor 4 der Sperrvorrichtung 5 dreht sich beim Vorwählen mit dem Schaltfinger 3, der eine Auswählnut 9, 10 oder 11 auswählt. Bei der nachfolgenden axialen Einrückbewegung werden eventuell an den nicht ausgewählten Schaltarmen auftretende axiale Kräfte über den Sperrsektor 4 an der axial festen Sperrvorrichtung 5 abgestützt. Dies ist z.B. der Fall, wenn, siehe Fig. 2, sich der Schaltfinger 3 noch nicht vollständig in die Auswählnut des nächsten Schaltarmes bewegt hat und der Fahrer dennoch bereits eine Schaltkraft, d.h., eine Kraft in axialer Richtung aufbringt. Für diesen Fall bietet die erfindungsgemäße Schaltführung 12 auch die entscheidende Möglichkeit der Verbesserung einer sogenannten Cross-Shift-Funktion, indem der jeweilige Innenbereich der Sperrzähne 16, 17 und 18 mit entsprechenden Abrundungen, wie sie z.B. am rechten Zahn 17 in Fig. 3 durch Schraffur angedeutet sind, versehen werden.

Bei einer axialen Schaltbewegung des Schaltfingers 3 gleitet dieser an den Innenkonturen der Sperrzähne 16, 17 und 18 vorbei und im Falle von Zwischenstellungen ergibt sich folgende Kraftfluß-Kette über die folgenden Elemente:

Vom Schaltfinger 3 zum Sperrzahn 17 (links) vom Sperrzahn 18 (rechts) zum Sperrsektor 4 der Sperrvorrichtung 5 und von dieser zum Getriebegehäuse.

Diese verhältnismäßig kurze Kraftfluß-Kette bringt den Vorteil einer hohen Steifheit für das Schaltgefühl und gleichzeitig eine geringe Toleranzanfälligkeit.

Durch eine entsprechende Konturierung der Innenseiten der Sperrzähne 16, 17 und 18 kann die sogenannte Cross-Shift-Funktion gefördert werden, die durch die kurze Kraftfluß-Kette zu einem sauberen und exakten Schaltgefühl führt.

## Patentansprüche

1. Schaltvorrichtung für Wechselgetriebe von Kraftfahrzeugen, mit einer zur Vorwahl der Schaltgassen verdrehbaren und zum Einlegen der Gänge axial verschiebbaren Schaltwelle (1) mit einem daran befestigten Schaltfinger (3), mit dem ein Sperrsektor (4) an einer im Gehäuse axial festgelegten Sperrvorrichtung (5) verdreht und die nicht vom Schaltfinger (3) ausgewählten Schaltarme (z.B. 7 und 8) von Schaltgabeln für die verschiedenen Gangstufen während einer Einrückbewegung des ausgewählten Schaltarmes (z.B. 6) gegen axiale Bewegung sperrt,
**dadurch gekennzeichnet**, daß
- im Gehäuse eine Schaltführung (12) festgelegt ist, die mit paarweisen, keilförmigen Sperrzähnen (16, 17 und 18) versehen ist, die zwischen einander benachbarten Schaltarmen (6 und 7 bzw. anliegend an einem äußeren Schaltarm 8) angeordnet sind und wobei
- die paarweisen, keilförmigen Sperrzähne (16, 17 und 18) mit ihren in der Ebene der Auswählnuten (9, 10 und 11) liegenden Innenkonturen (19, 20 und 21) unmittelbar mit dem Schaltfinger (3) zusammenwirken.

2. Schaltvorrichtung für Wechselgetriebe von Kraftfahrzeugen, nach Anspruch 1,
**dadurch gekennzeichnet**, daß
- die Schaltführung (12) mit Führungsleisten (13 und 14) versehen ist, die über eine Brücke (15) miteinander verbunden sind und die die Schaltführung (12) an entsprechenden Teilen der Schaltarme (6 und 7) festlegen.

3. Schaltvorrichtung für Wechselgetriebe von Kraftfahrzeugen, nach Anspruch 1,
**dadurch gekennzeichnet**, daß
- die Schaltführung (12) an den Schaltstangen für die Schaltgabeln festgelegt ist.

## Claims

1. Shifting device for gearboxes of motor vehicles, with a selector shaft (1) which is rotatable to pre-select the gear passages and axially displaceable to engage the gears, with a shift finger (3) secured thereto, with which a locking sector (4) on a locking device (5) axially secured in the casing rotates and locks the shift arms (e.g. 7 and 8) of gearshift forks for the different gears not selected by the shift finger (3) during an engagement movement of the selected shift arm (e.g. 6) against axial movement,
characterised in that
- in the casing a shift guide (12) is secured which is provided with pair-wise wedge-shaped locking teeth (16, 17 and 18) which are arranged between mutually adjacent shift arms (6 and 7 and/or adjoining an external shift arm 8) and
- the pair-wise wedge-shaped locking teeth (16, 17 and 18) cooperating directly with the shift finger 2 [sic] with their internal contours (19, 20 and 21) lying in the plane of the selector grooves (9, 10 and 11).

2. Shifting device for gearboxes of motor vehicles according to Claim 1,
characterised in that
- the shift guide (12) is provided with guide strips (13 and 14) which are connected to each other by means of a bridge (15) and which secure the shift guide (12) to corresponding parts of the shift arms (6 and 7).

3. Shifting device for gearboxes of motor vehicles according to Claim 1,
characterised in that
- the shift guide (12) is secured to the shift rods for the gearshift forks.

## Revendications

1. Dispositif de changement de vitesses pour boîte de vitesses de véhicules automobiles, comprenant un arbre de changement de vitesses (1) rotatif pour la présélection des voies de changement de vitesses et axialement coulissant pour l'enclenchement des rapports, avec un doigt de commande (3) qui est fixé sur cet arbre et avec lequel un secteur de verrouillage (4), d'un dispositif de verrouillage (5) axialement fixé en position dans la boîte, tourne et empêche, pendant un mouvement d'engagement du bras de sélection choisi (6 par exemple), le déplacement axial des bras de sélection (7 et 8 par exemple), non choisis par le doigt de commande (3), de fourchettes de sélection pour les différents étages de boîte,
**caractérisé** en ce que
- un guide de sélection (12) est fixé en position dans la boîte, guide qui est pourvu de dents de verrouillage (16, 17 et 18) cunéiformes, jumelées, qui sont disposées entre des bras de sélection mutuellement voisins (6 et 7) ou, respectivement, en application contre un bras de sélection extérieur (8),
- les dents de verrouillage (16, 17 et 18) cunéiformes jumelées coopérant directement avec le doigt de commande (3) par leurs contours intérieurs (19, 20 et 21) situés dans le plan des rainures de sélection (9, 10 et 11).

2. Dispositif de changement de vitesses pour boîte de vitesses de véhicules automobiles selon la revendication 1, **caractérisé** en ce que le guide de sélection (12) est pourvu de bordures de guidage (13 et 14), qui sont mutuellement reliées par un pont (15) et qui fixent en position le guide de sélection (12) sur des parties correspondantes des bras de sélection (6 et 7).

3. Dispositif de changement de vitesses pour boîte de vitesses de véhicules automobiles selon la revendication 1, **caractérisé** en ce que le guide de sélection (12) est fixé en position sur les tiges de commande des fourchettes de sélection.
